# EUROPÄISCHE PATENTANMELDUNG

(11) **EP 3 808 894 A1**
(43) Veröffentlichungstag der Anmeldung: **21.04.2021**
(21) Anmeldenummer: 20194626.6
(22) Anmeldetag: 04.09.2020
(51) Int. Cl.: D06N 3/04, D06N 3/18, B32B 27/32, D06N 3/00

(54) **VERFAHREN ZUR HERSTELLUNG VON POLYOLEFINFOLIEN, DANACH ERHÄLTLICHE POLYOLEFINFOLIEN UND DEREN VERWENDUNG**

(30) Priorität: 14.10.2019 DE 102019215779
(71) Anmelder: Benecke-Kaliko AG, 30419 Hannover (DE)
(72) Erfinder: Band, Florian - c/o Continental AG, 30419 Hannover (DE); Prömpers, Günter Leo - c/o Continental AG, 30419 Hannover (DE); Hülsewede, Volker - c/o Continental AG, 30419 Hannover (DE)
(74) Vertreter: Continental Corporation

(57) **Zusammenfassung**

Die vorliegende Erfindung betriff ein Verfahren zur Herstellung einer Polyolefinfolie umfassend die Schritte: a) Auftragen einer Dispersion, umfassend mindestens ein Polyolefin, auf einen Träger und b) thermische Behandlung der Dispersion auf dem Träger, eine durch dieses Verfahren hergestellte Polyolefinfolie, ein Verbundschichtmaterial umfassend eine solche Polyolefinfolie, und die Verwendung der Polyolefinfolie oder des Verbundschichtmaterials als Bezugsmaterial.

## Beschreibung

Die vorliegende Erfindung betriff ein Verfahren zur Herstellung einer Polyolefinfolie, eine durch dieses Verfahren hergestellte Polyolefinfolie, ein Verbundschichtmaterial umfassend eine solche Polyolefinfolie und die Verwendung der Polyolefinfolie oder des Verbundschichtmaterials als Bezugsmaterial.

Dekorative lederähnliche Bezugsmaterialien im Innenraum von Fahrzeugen, die dynamischen Belastungen ausgesetzt sind, müssen neben der geforderten Flexibilität in der Kälte und in der Wärme für den Endnutzer auch ausreichend gebrauchstüchtig sein. Das heißt, dass das Bezugsmaterial abriebbeständig, alterungsstabil und auch gut reinigbar sein muss. Dieses gilt insbesondere für Sitzbezugsmaterialien, die ständig dynamischen Belastungen ausgesetzt sind und sich ständig im Kontakt mit der Kleidung des Passagiers befinden. Durch die fortwährende Reibung zwischen Kleidung und Bezugsmaterial und durch die permanent wechselnden Druckbelastungen ist das Bezugsmaterial konstant einer hohen Beanspruchung ausgesetzt.

Eine starke Belastung erfahren Bezugsmaterialien insbesondere im Sitzbereich eines Kraftfahrzeuges insbesondere an den Seitenwangen der Lehnen und der Sitzfläche an der jeweiligen Einstiegsseite, da das Sitzmaterial beim Einsteigen einer kombinierten hohen Druck- und Reibungsbelastung ausgesetzt ist. Kommt zusätzlich eine niedrige Umgebungstemperatur dazu, ist die Gefahr sehr groß, dass das Bezugsmaterial schon nach kurzer Zeit Risse oder andere Beschädigungen aufweist und der gesamte Sitzbezug erneuert werden muss.

Eine weitere Anforderung, die an Bezugsmaterialien gestellt wird, die im Fahrzeuginnenraum eingesetzt werden sollen, ist die Abwesenheit toxischer oder gesundheitsgefährdender Stoffe. Solche Substanzen dürfen nur unterhalb niedriger Grenzwerte vorliegen.

Die derzeit auf dem Markt erhältlichen Verbundschichtmaterialien, die als Bezugsmaterialien mit Lederoptik eingesetzt werden, erfüllen die vorgenannten Anforderungen in der Regel nicht auf Dauer.

Im automobilen Interieur verbreitet sich zudem die Anforderung einer PVC und/oder phthalatfreien Kunstlederlösung. So besteht aufgrund der Erfahrung mit Migrationen von Kleberbestandteilen auf die Oberfläche sowie dem Phänomen Cool spotings, der oberflächlichen Ansammlung von Weichmacher durch konstant niedrige Temperatur, die Nachfrage nach Kunstlederprodukten auf Polyolefinbasis. Ferner wünschen moderne Automobilkonzerne aufgrund ihrer Nachhaltigkeitsstrategie PVC und Phthalate zu substituieren und besser recyclebare Materialien einzusetzen. Zudem wird zunehmend eine günstige Alternative zum hochwertigen aber teuren Polyurethankunstleder gefordert.

Die Herstellung von Kunstlederprodukten auf Polyolefinbasis ist prinzipiell bekannt. Dazu werden bekannte Polymeren wie Polyethylen oder Polypropylen aus einer Granulatform in der Schmelze mit bekannten Kunststoffverarbeitungsmaschinen, wie Extruder oder Kalandern, zu flachen Folien verarbeitet. Die daraus hergestellten Folien werden durch verschiedene Weiterverarbeitungsschritte zu sogenannten Kompakt- oder Schaumfolien sowie durch Kaschierung mit einem Textil zu einem Kunstleder verarbeitet. Bei beiden Prozessen stellt die Kaschierung des Textils eine besondere Herausforderung dar. Sowohl die Kleberkaschierung als auch die thermische Kaschierung sind jeweils mit Nachteilen behaftet. Ferner können durch die genannten Herstellungsverfahren (Extrusions- oder Kalandrierprozesse) prozessbedingt nur anisotrope Folien hergestellt werden. Daraus resultieren unterschiedliche mechanische Eigenschaften in den Raumrichtungen (bezogen auf die Maschinenlaufrichtung). Durch erforderliche Prozessadditive und starke Scherbelastungen der Rohstoffe während der Verarbeitung können Emissionen und Abspaltprodukte entstehen.

Aufgabe der vorliegenden Erfindung war es, die vorstehend genannten Nachteile zu beseitigen und ein Verfahren zur Herstellung einer Polyolefinfolie bereitzustellen, das die kostengünstige und umweltfreundliche Herstellung isotroper Folien ermöglicht, die problemlos auf weitere Materialien, wie textile Träger, aufkaschiert werden können.

Diese Aufgabe wird durch ein Verfahren gemäß Anspruch 1 gelöst, umfassend die Schritte:
a) Auftragen einer Dispersion, umfassend mindestens ein Polyolefin, auf einen Träger und
b) thermische Behandlung der Dispersion auf dem Träger, um eine Polyolefinfolie zu erhalten,
   gelöst.

Ein solches Verfahren hat den Vorteil, dass aus der Herstellung einer polyolefinischen Folie auf Basis einer vorzugsweise wässrigen Dispersion eine Polyolefinfolie mit isotropen Folieneigenschaften resultiert. Dies wirkt sich insbesondere im Fahrzeuginnenräumen bei Anwendungen mit Airbagkontakt positiv aus, da das Verhalten von in Serie eingesetzten anisotropen Folien schwer zu definieren ist. Des Weiteren erhält man durch das beschriebene Verfahren sehr matte Folienoberflächen, die vom Markt gefordert werden.

Durch den bevorzugten Einsatz von Wasser als Lösungsmittel bzw. Dispersionsmittel sind im Vergleich zu bekannten Folien aus PVC oder PUR Folien mit sehr niedrigen Emissionen darstellbar.

Durch die Herstellung der Folie nach dem erfindungsgemäßen Verfahren entfallen starke thermische und mechanische Belastungen auf die eingesetzten Rohstoffe im Vergleich zur Verarbeitung auf Extrudern oder Kalandern.

Außerdem wird durch das erfindungsgemäße Verfahren die problemlose Kaschierung mit den in der Automobilindustrie typischen Textilien ermöglicht, insbesondere Abstandsgewirke, welches mit den bisherigen Verfahren nicht möglich ist.

Ein weiterer Vorteil ist, dass durch die Direktkaschierung eine Weichheit der Beschichtung erreicht werden kann, die durch Extrusion- bzw. Kalandriertechnik nicht darstellbar ist.

Bei dem erfindungsgemäßen Verfahren handelt es sich im Wesentlichen um eine Verfahrensführung, die unter dem Begriff Umkehrbeschichtungsverfahren oder Umkehrstrichverfahren bekannt ist (siehe beispielsweise Ullmann's Encyclopedia of Industrial Chemistry, 6th ed., Wiley-VCH, Weinheim 2002, Kapitel "Leather Imitates" 20 von C. Zürbig und H.-H. Kruse).

Das erfindungsgemäße Verfahren bezieht sich vorzugsweise auf ein kontinuierliches Verfahren.

Dabei wird vorzugsweise in einem kontinuierlichen Verfahren auf einen Träger (beispielsweise auf Basis von Papier oder einem Polymeren, wie Polyolefinen oder Silikonen), der vorzugsweise die negative Oberflächenstruktur des späteren Bezugsmaterials besitzt, zuerst die Polymermasse z.B. mittels eines Messerrakels aufgetragen und diese nachfolgend in einem Ofen thermisch zu einem Film ausgehärtet. Danach erfolgt vorzugsweise wiederum, z.B. mit einer Messerrakel, der Auftrag einer weiteren Schicht, die wiederum im Ofen ausgehärtet wird. Alternativ kann beispielsweise eine Kaschiermasse aufgebracht werden, in die ein vorzugsweise textiler Träger eingelegt wird. Anschließend wird die aufgetragene Schicht im Ofen getrocknet, wodurch sich der textile Träger dauerhaft mit der restlichen Konstruktion verbindet, und man trennt zuletzt den ggf. strukturierten Träger vom hergestellten Verbundschichtmaterial.

Gemäß der vorliegenden Offenbarung kann "umfassen" auch "bestehend aus" bedeuten.

Der Schritt a) des erfindungsgemäßen Verfahrens ist dadurch gekennzeichnet, dass eine Dispersion, umfassend mindestens ein Polyolefin (Polyolefindispersion), auf einen Träger aufgetragen wird.

Dispersion ist eine Bezeichnung für ein heterogenes System (disperses System) aus mehreren Phasen, von denen eine kontinuierlich Phase (Dispersionsmittel) und mindestens eine weitere Phase darin fein verteilt ist (dispergierte Phase, Dispergens).

In der vorliegenden Dispersion bildet das Polyolefin die dispergierte Phase und vorzugsweise Wasser das Dispersionsmittel.

Gemäß einer bevorzugten Ausführungsform der vorliegenden Erfindung umfasst der Träger ein Material, das bei Temperaturen von mehr als 160°C beständig ist. Vorzugsweise weist das Trägermaterial eine Temperaturbeständigkeit von bis zu 220°C auf.

Der Träger ist vorzugsweise so ausgelegt sein, dass das Dispersionsmittel der Dispersion, umfassend mindestens ein Polyolefin, nicht in den Träger einziehen kann.

Ferner ist es bevorzugt, dass die erhaltene Polyolefinfolie leicht von dem Trägermaterial ablösbar ist.

Geeignete Materialien für den Träger umfassen dabei Papier, das mit speziellen Chemikalien, wie z.B. wie z.B. Polymethylpenten oder Silikon beschichtet sind.

Weitere geeignete Materialien für den Träger umfassen sogenannte Narbbänder, die bereits die Narbinformationen enthalten und aus einem textilen Gewebe mit einer speziellen Oberflächenschicht aus Polypropylen und einem Füllstoff bestehen. Geeignete Narbbänder sind beispielsweise in der DE 44 22 871 A1 beschrieben.

Die Polyolefindispersion kann dabei durch dem Fachmann bekannte Vorrichtungen, wie z.B. Beschichtungsrakeln, Breitschlitzdüse, Sprühdüse oder Druckwalze aufgetragen werden.

Der Schritt b) des erfindungsgemäßen Verfahrens ist dadurch gekennzeichnet, dass die Dispersion auf dem Träger einer thermischen Behandlung unterzogen wird, um eine Polyolefinfolie zu erhalten.

Die Temperatur dieser thermischen Behandlung sollte dabei vorzugsweise höher sein als die Schmelztemperatur des mindestens einen Polyolefins in der Polyolefindispersion. Geeignete Temperaturen liegen insbesondere im Bereich von 90 °C bis 190 °C, vorzugsweise im Bereich von 110 °C bis 170 °C.

Es ist bei dem erfindungsgemäßen Verfahren auch möglich, einen mehrschichtigen Verbund von Polyolefinfolien herzustellen. Dabei wird zunächst eine erste Schicht einer Polyolefinfolie gemäß dem erfindungsgemäßen Verfahren hergestellt und dann gemäß Schritt a) eine weitere Schicht einer Polyolefindispersion aufgebracht und anschließend gemäß Schritt b) thermisch behandelt, sodass ein zweischichtiger Verbund aus Polyolefinfolien gebildet wird. Die Schichten können dabei eine gleich oder eine unterschiedliche Zusammensetzung aufweisen. Insbesondere kann es sich bei einer Schicht des mehrschichtigen Verbundes um eine geschäumte Polyolefinfolie handeln.

Bevorzugt ist das erfindungsgemäße Verfahren dadurch gekennzeichnet, dass der Schritt b) eine thermische Behandlung bei zwei unterschiedlichen Temperaturen umfasst.

Bevorzugt umfasst die thermische Behandlung in Schritt b) die Schritte:
b1) Vortrocknen der Dispersion umfassend mindestens ein Polyolefin auf dem Träger, um das Dispersionsmittel weitgehend zu entfernen, und
b2) Erhöhung der Temperatur auf eine Temperatur oberhalb des Schmelzpunktes des mindestens einen Polyolefins, um eine Polyolefinfolie zu erhalten.

Unter weitgehend entfernen wird hier vorzugsweise das Entfernen des Dispersionsmittels bis zu einem Dispersionsmittelgehalt von 45 bis 60 Gew.-%, vorzugsweise von 45 bis 58 Gew.-%, ganz besonders bevorzugt das komplette Entfernen des Dispersionsmittels verstanden.

Die thermische Behandlung bei den zwei unterschiedlichen Temperaturen in Schritt b1) bzw. b2) kann auch kontinuierlich, beispielsweise mittels eines entsprechenden Temperaturgradienten, in einem Trocknungsofen erfolgen.

Bei dem Vortrocknen sind die Temperaturen vorzugsweise so zu wählen, dass das Dispersionsmittel rasch ausdiffundieren kann, die verbleibenden Polymerpartikel jedoch noch nicht aneinander sintern und so das Ausdiffundieren behindern.

Durch die Erhöhung der Temperatur auf eine Temperatur oberhalb des Schmelzpunktes des mindestens einen Polyolefins in Schritt b2) sintern die Polymerpartikel letztlich aneinander und ergeben einen geschlossenen, festen Film.

Diese thermische Behandlung wird vorzugsweise für mindestens 1 min, bevorzugt für 1 min bis 3 min durchgeführt.

Vorzugsweise beträgt die Temperatur für die Vortrocknung in Schritt b1) 40 °C bis 80°C, vorzugsweise von 50 °C bis 60 °C. bevorzugt werden diese Temperaturen für 2 bis 10 min, besonders bevorzugt für 3 bis 8 min gehalten.

Das erfindungsgemäße Verfahren ist vorzugsweise dadurch gekennzeichnet, dass die thermische Behandlung in Schritt b) oder Schritt b2) das Erwärmen auf eine Temperatur von 40 °C bis 80 °C, vorzugsweise von 50 °C bis 60 °C , umfasst.

Diese thermische Behandlung wird vorzugsweise für mindestens 1 min, bevorzugt für 1 min bis 2 min durchgeführt.

Der eingesetzte Träger ist vorzugsweise genarbt. Durch eine Narbung des Trägers kann eine Polyolefinfolie mit einer Oberflächenstruktur erhalten werden.

Alternativ kann der Träger auch ungenarbt sein und die Polyolefinfolie kann auch anschließend mit einer Prägung versehen werden (z.B. Prägewalze, Matrize), da es sich um eine thermoplastische Folie handelt.

Eine Narbung ist eine Oberflächenstruktur mit einem gleichmäßig oder verworrenen Linienmuster. Oft ist eine Narbung aus haptischen oder optischen Gründen erwünscht. Genarbte Oberflächen sind natürlicherweise bei verschiedenen Ledersorten vorhanden, so dass auch Kunststoffteile und Kunstleder oft mit einer Narbung versehen werden.

Das erfindungsgemäße Verfahren ist vorzugsweise dadurch gekennzeichnet, dass das mindestens eine Polyolefin, Polyethylen, Polypropylen und/oder Copolymere davon umfasst. Besonders bevorzugt ist der Einsatz von Polyethylen/Polypropylen-Copolymeren.

Geeignete Polyolefine sind beispielsweise unter den Handelsnamen HYPOD und CANVERA von DOW Chemical bekannt.

Geeignete Polyolefine weisen vorzugsweise einen Glasübergangspunkt von -53 bis -26°C auf. Der Glasübergangspunkt wird dabei mittel DSC gemäß ISO 11357-1 bis 3 (2016) bestimmt

Geeignete Polyolefine weisen vorzugsweise einen Schmelzpunkt von 63 bis 85°C auf. Der Schmelzpunkt wird dabei gemäß ISO 11357-1 bis 3 (2016) bestimmt. Vorzugsweise liegt die Partikelgröße der eingesetzten Polyolefine bei etwa 0,5 bis 2 µm vorzugsweise bei etwa 1 µm. Die Partikelgröße wird dabei den Herstellerangaben entnommen.

Das erfindungsgemäße Verfahren ist vorzugsweise dadurch gekennzeichnet, dass die Dispersion umfassend mindestens ein Polyolefin eine wässrige Dispersion ist. D.h., das Dispersionsmittel ist vorzugsweise Wasser.

Durch den Einsatz von Wasser als Dispersionsmittel sind im Vergleich zu bekannten Folien aus PVC, TPO oder PUR Folien mit sehr niedrigen Emissionen darstellbar.

Das erfindungsgemäße Verfahren ist vorzugsweise dadurch gekennzeichnet, dass die Dispersion umfassend mindestens ein Polyolefin einen Feststoffanteil von 30 bis 70 Gew.-%, vorzugsweise von 40 bis 55 Gew.-%, aufweist.

Ein Feststoffanteil in diesem Bereich hat den Vorteil, dass eine stabile Dispersion bei gleichzeitig hohem Feststoffanteil erhalten wird, um eine erfindungsgemäße Filmbildung zu ermöglichen.

Das erfindungsgemäße Verfahren ist vorzugsweise dadurch gekennzeichnet, dass die Dispersion umfassend mindestens ein Polyolefin eine Viskosität von 3000 bis 75000 mPas, vorzugsweise von 4000 bis 50000 mPas, aufweist.

Die Viskosität wird dabei gemäß DIN 53019-1 (2008) bei einer Temperatur von 23 °C bestimmt.

Bei zu niedriger Viskosität kann keine geschlossene Oberfläche entstehen, da die Dispersion zu stark verläuft. Bei zu hoher Viskosität kann das Dispersionsmittel beim Verarbeitungsprozess nicht ausreichend ausdiffundieren, wodurch Blasen entstehen und in der Folie eingeschlossen bleiben.

Um eine verarbeitbare Dispersionsmasse zu erhalten, kann die Viskosität vorzugsweise durch entsprechende Additive auf 3000 bis 75000 mPas, vorzugsweise auf 4000 bis 50000 mPas, eingestellt werden.

Geeignete Additive umfassen z.B. Borchers Borchigel (Borchers) oder Cartacoat (Archroma).

Bei dem erfindungsgemäßen Verfahren ist es bevorzugt, dass die Dispersion, umfassend mindestens ein Polyolefin, mindestens ein Rheologieadditiv enthält.

Das mindestens eine Rheologieadditiv wird dabei vorzugsweise aus der Gruppe, bestehend aus Zirkoniumverbindungen, Celluloseverbindungen und/oder Acrylat-Copolymeren, ausgewählt.

Je nach Wirkungsweise werden vorzugsweise 1 bis 20 phr, vorzugsweise 2 bis 10 phr dieser Additive auf 100 phr Grunddispersion zugegeben.

Da beim Dispergieren des Rheologieadditives mittels Rührens Luft in die Dispersionsmasse eingezogen wird, kann der Rezeptur zusätzlich mindestens ein Entschäumungshilfsmittel, vorzugsweise auf Basis eines kieselsäurehaltigen Polysiloxans, zugegeben werden.

Die Menge des mindestens einen Entschäumungshilfsmittel beträgt vorzugsweise von 0,1 bis 1 phr, besonders bevorzugt von 0,3 bis 0,5 phr, bezogen auf 100 phr Grunddispersion.

Zusätzlich zu den oben beschriebenen Rezepturbestandteilen, können den Dispersionen unterschiedliche Additive zur Herstellung einer geschäumten Polyolefinfolie zugegeben werden.

Eine Möglichkeit besteht darin in der Dispersion expandierbare Mikrohohlkugeln zu dispergieren, die im anschließenden Verarbeitungsprozess unter thermischer Einwirkung expandieren und somit eine geschäumte Folie erzeugen. Diese als Treibmittel fungierenden Mikrohohlkugeln umfassen eine mit Isopentan gefüllte Hülle, vorzugsweise aus einem Acrylnitril-Copolymer. Je nach Type expandieren die Mikrohohlkugeln bei Temperaturen von vorzugsweise 80 °C bis 230 °C. In unexpandiertem Zustand weisen die Mikrohohlkugeln einen Durchmesser von ca. 10 bis 30µm auf, der nach der Expansion bis auf das 40-fache ansteigen kann.

Das erfindungsgemäße Verfahren ist daher vorzugsweise dadurch ausgestaltet, dass die Dispersion, umfassend mindestens ein Polyolefin, expandierbare Mikrohohlkugeln umfasst.

Die expandierbare Mikroholkugeln können vorzugsweise in einer Menge von 0,1 bis 1 phr, vorzugsweise von 0,3 bis 0,7 phr, bezogen auf 100phr Grunddispersion, enthalten sein.

Eine weitere Möglichkeit ist die Zugabe eines bestimmten nichtionischen Tensids. Unter starker mechanischer Einwirkung auf die Dispersionsmasse wird Luft mittels eines speziellen Rührwerkes in die Masse untergerührt, wodurch ein blasenförmiges Aufschäumen bewirkt wird. Diese Schaumstruktur bleibt während und nach der Verarbeitung durch die spezielle Additivierung erhalten. Das Additiv umfasst dabei vorzugsweise Abmischungen von Fettsäureestern, die durch ihre Wirkungsweise als Tensid eine Schaumbildung und Stabilisierung bewirken.

Das erfindungsgemäße Verfahren ist vorzugsweise dadurch gekennzeichnet, dass die Dispersion, umfassend mindestens ein Polyolefin, mindestens ein anionisches Tensid umfasst. Durch die Molekülstruktur der Fettsäureester ist ein Teil der Bindungsenden hydrophil und ein anderer Teil hydrophob, wodurch die Oberfläche der Schaumblasen gebildet wird.

Das mindestens eine anionische Tensid liegt vorzugsweise in einer Menge von 0,1 bis 2 phr, insbesondere von 0,8 bis 1 phr, bezogen auf 100 phr Grunddispersion, vor.

Zur Verbesserung der mechanischen und thermischen Eigenschaften sowie der Narbstabilität der wasserdispersionsbasierten Polyolefinfolien ist es zweckmäßig eine anschließende Vernetzung mittels Elektronenbestrahlung vorzugsweise mit 900 bis 1100 kV durchzuführen.

Zusätzlich zu den genannten Verarbeitungshilfsmitteln kommen für die Farbgebung der Folien flüssige Pigmente vorzugsweise in Konzentrationen von bis zu 30 phr zum Einsatz. Auch der Einsatz von Thermo- und Lichtstabilisatoren, Flammschutzmitteln, Antistatika etc. ist vorteilhaft.

Die vorliegende Erfindung umfasst auch eine Polyolefinfolie, erhältlich durch das vorstehend beschriebene Verfahren.

Den derzeitigen Stand der Technik im Bereich polyolefinischer Folien, insbesondere für den Automobilbereich, stellen aus der Schmelze mittels Breitschlitzdüse extrudierte oder durch Walzen kalandrierte Schaum- und Kompaktfolien dar.

Ein grundlegender Unterschied zu den Polyolefinfolien, erhältlich durch das erfindungsgemäße vorstehend beschriebene Verfahren, stellen die mechanischen Eigenschaften in Abhängigkeit zur Maschinenrichtung dar. Extrusions- und Kalanderfolien weisen durch intensive Scherbelastungen während der Verarbeitung in Quer- und Längsrichtung unterschiedliches Spannungs-Dehnungsverhalten auf. Die dispersionsbasierten Polyolefinfolien zeigen jedoch isotrope mechanische Eigenschaften, d.h. das Spannungs-Dehnungsverhalten ist in allen Raumrichtungen gleich.

Die vorliegende Erfindung umfasst auch ein Verbundschichtmaterial umfassend:
- eine textile Trägerschicht oder eine textile Trägerschicht verbunden mit Polyurethan- oder Polyolefinschaum,
- eine mit der textilen Trägerschicht verbundene Kaschierschicht
- eine Polyolefinfolie erhältlich durch das vorstehend beschriebene Verfahren.

Die Polyolefinfolie erhältlich durch das vorstehend beschriebene Verfahren bildet dabei vorzugsweise die nach außen gerichtete Deckschicht des Verbundschichtmaterials.

Das Verbundschichtmaterial kann weitere Schichten, wie beispielsweise weitere Polyolefinschichten und/oder Polyurethanschichten innerhalb des Verbundes oder weitere auf der Polyolefinschicht aufgebrachte Lackschichten, aufweisen.

Insbesondere können weitere geschäumte Polyolefinschichten als Zwischenschichten vorliegen. Die geschäumten Polyolefinschichten werden dabei vorzugsweise, wie vorstehend erläutert, durch die Zugabe von Mikrohohlkugeln oder mechanisch erzeugt und stabilisiert mit anionischen Tensiden, erhalten.

Bei der textilen Trägerschicht kann es sich z. B. um Nadel- oder Wasserstrahlvliese, Gewirke, Gestricke, Gewebe, Abstandsgewirke, senkrechte Polfäden enthaltende Vliese 15 (z. B. Multiknit oder Optiknit) handeln. Die Flächengewichte betragen üblicherweise 50 bis 500 g/m².

Als Basis der Fäden können beispielsweise folgende Materialien zum Einsatz kommen: Mischungen aus Baumwolle und Polyester (in der Regel auf der Basis von Polyethylenterephthalat), Lyocell, Polyamide, Polyethylenterephthalat, Polyacrylate, Aramide.

Gemäß einer vorteilhaften Weiterbildung der Erfindung enthält die textile Trägerschicht flammgeschützte Textilien, um eine hohe Flammbeständigkeit zu erzielen. Als solche flammgeschützten Textilien können entweder solche eingesetzt werden, die mit Flammschutzmittel ausgerüstet sind, oder es werden solche eingesetzt, die üblicherweise schon schwerer entflammbar sind, z. B. Textilien auf Basis von nicht mit Flammschutzmitteln ausgerüstetem Polyethylenterephthalat. Bei letzteren enthalten deren textile Fäden bereits flammschützende Einheiten in den Polymerketten oder es handelt sich um Textilien auf Basis flammhemmender aromatischer Polyamide (z. B. Kevlar®, Nomex®) oder anderer flammhemmender Polymere (beispielsweise Lenzing FR®, Basofil®, Twaron®, Kermel®, BelcoTex®, Pyron®, Trevira CS®, Polysulfonamid (Tanlon®), Polyphenylensulfid). Einsetzbar sind auch Textilien auf Basis von Glasfasern, Mineralfasern, Metallfäden oder Polymerfäden, die metallische Anteile enthalten.

Die textile Trägerschicht wird vorzugsweise mit einer Kaschiermasse, die die Kaschierschicht bildet, mit der nachfolgenden Schicht verbunden.

Die Kaschiermasse dringt vorzugsweise weitestgehend in die textile Trägerschicht ein und bildet die Verbindung zu der nachfolgenden Lage/Schicht.

Als Kaschiermasse kann eine wässrige Dispersionskaschiermasse, insbesondere auf Basis von Polyolefinen, wie z.B. Hypod (DOW), eingesetzt werden.

Alternativ dazu können auch sogenannte thermoplastische Hotmeltkleber eingesetzt werden. Diese können beispielsweise über Streuverfahren aufgebrachte thermoplastische Pulver wie Polyester oder Polyamide oder über eine Breitschlitzdüse oder Druckwalze aufgebrachte thermoplastische Filme sein. Angewandt werden auch Verfahren wie Sprühen aus Düsen oder Verfahren unter Verwendung einer rotierenden Austrittsdüse. Es können dabei auch reaktive thermoplastische Kaschierkleber verwendet werden, die nach erfolgter Applikation und Erstarrung unter Einwirkung von Umgebungsfeuchtigkeit vernetzen.

Möglich ist auch die Verwendung thermoplastischer offener Klebewebs oder von Textilien, die aufgebrachte thermoplastische Elemente beispielsweise in Form einer Punktdotierung als Kaschierschicht enthalten.

Durch das erfindungsgemäße Verfahren wird die problemlose Kaschierung mit den in der Automobilindustrie typischen Textilien ermöglicht insbesondere Abstandsgewirke, was mit dem bisherigen Verfahren nicht möglich ist.

Ein weiterer Vorteil der Erfindung ist es, dass durch die Direktkaschierung eine Weichheit der Beschichtung erreicht werden kann, die durch Extrusion- bzw. Kalandriertechnik nicht darstellbar ist.

Gemäß einer weiteren vorteilhaften Weiterbildung der Erfindung weist das Verbundschichtmaterial auf der Polyolefinschicht nach außen weisend weitere Lackschichten auf. Dies dient der Verbesserung der Gebrauchstüchtigkeit, insbesondere im Hinblick auf die Abriebeigenschaften, die Kratzfestigkeit, das Reinigungsverhalten, die Beständigkeit gegen Wasch- und Lösemitteln, den Glanzgrad, die Farbe und/oder die Alterungseigenschaften. Die Lackschichten können auf lösemittelhaltigen oder wässrigen Polyurethan- und/oder Acrylatsystemen basieren, die über übliche Druckverfahren z. B. im direkten oder indirekten Raster-Tiefdruck oder Reverse Roller Coating appliziert werden können.

Vorzugsweise ist zumindest eine der Lackschichten vernetzt. Für derartige vernetzte Lackschichten eignen sich insbesondere über elektromagnetische Strahlung vernetzende Systeme (UV-Licht-Vernetzung, Elektronenstrahlvernetzung) oder thermisch bzw. über chemische Reaktionen vernetzende Systeme wie Isocyanat- oder Carbodiimid-vernetzende Polyurethansysteme.

Aus ästhetischen Gründen kann die für den Kunden sichtbare Oberfläche des Verbundschichtmaterials, d. h. die Polyolefinfolie mit den ggf. vorhandenen Lackschichten, mit einem Druck (z. B. Bilder, Muster) versehen werden. Zusätzlich kann die Oberfläche mit einer Struktur, Prägung und/oder transparenten Lackschichten und/oder transparenten Folienschichten versehen werden.

In allen Schichten des erfindungsgemäßen Verbundschichtmaterials können Hilfsmittel und Additive, wie Gleitmittel, Rheologiehilfsmittel, Verdicker, Flammschutzmittel, Stabilisatoren gegen oxidativen, thermischen, hydrolytischen, strahlungsinduzierten oder mikrobiellen Abbau oder Alterung, Trennmittel, Pigmente, Verstärkungsstoffe, Füllstoffe oder Treibmittel eingesetzt werden. Solche Hilfsmittel und Additive sind beispielsweise beschrieben in H. Zweifel, Plastics Additives Handbook, 5. Auflage. Carl Hanser Verlag, München.

Für eine besonders gute Flexibilität und Verarbeitbarkeit des Verbundschichtmaterials weisen die einzelnen Schichten vorzugsweise folgende Schichtdicken auf:
Kaschierschicht: 10 bis 100µm, bevorzugt 10 bis 50µm
Polyolefinschicht: 10 bis 600 µm, bevorzugt 20 bis 300 µm.
Lackschicht: 1 bis 100 µm, bevorzugt 3 bis 20 µm.
Optional:
   Geschäumte Polyolefinschicht: 100 bis 5000 µm

Die üblichen Flächengewichte für die einzelnen Schichten betragen:
Textile Trägerschicht: 50 bis 500 g/m².
Polyolefinschicht: 10 bis 200 g/m² (trocken).
Lackschicht: 1 bis 100 g/m² (trocken).
Optional:
   Geschäumte Polyolefinschicht: 10 bis 500 g/m².

Das erfindungsgemäße Verbundschichtmaterial ist sowohl im modisch technischen Bereich (Schuhe, Taschen, Bekleidung usw.) als auch in sonstigen Bereichen, wie Verpackung, Medizin oder Bauwesen, wo beschichtete Textilien eingesetzt werden, verwendbar. Durch die Vermeidung toxischer Substanzen bestehen hinsichtlich eines direkten Kontaktes mit der menschlichen Haut keine Bedenken.

Vorzugsweise wird das erfindungsgemäße Verbundschichtmaterial als dekoratives Innenraummaterial z. B. im Transportwesen, Schiffbau, bei Möbeln usw. verwendet, insbesondere als oberflächenstrukturierte Bezugsmaterialien. Die vorteilhaften Eigenschaften des Verbundschichtmaterials kommen dann zum Tragen, wenn sie in Bereichen eingesetzt werden, die mit der bekleideten oder unbekleideten menschlichen Haut in Berührung kommen und zugleich dynamischen Belastungen ausgesetzt sind.

Die Erfindung umfasst daher die Verwendung einer Polyolefinfolie erhältlich gemäß dem vorstehend beschriebenen Verfahren oder eines vorstehend beschriebenen Verbundschichtmaterials als Bezugsmaterial, vorzugsweise im automobilen Interieur.

Dieses können Schaltbälge, Lenkradabdeckungen, Instrumententafeln, Türbrüstungen, Armablagen, Rückenlehnen, Kopfstützen und insbesondere alle Arten von Sitzen im oder außerhalb des Automobils sein.

Die Erfindung wird anhand der folgenden nicht beschränkenden Beispielen näher erläutert:

### Beispiel 1:

Ein Versuchsansatz bestehend aus

| | |
|---|---|
| 900 g | Hypod 2000-Dispersion (Dow Chemical) |
| 27 g | Verdicker - Borchigel (Borchers) |
| 3 g | Entschäumer - Foamex 825 (Tego) |
| 5 g | flüssiges Schwarzpigment - LW904 (Helio Beit) |
| 25,5 g | Titandioxid |

wurde vor der Verarbeitung gerührt und entlüftet (Entlüftungszeit 15 min). Die Viskosität wurde mit 3500mPas gemessen. Die Viskosität wurde dabei gemäß DIN 53019-1 (2008) bei einer Temperatur von 23 °C gemessen.

Die Masse wurde durch ein 300 µm Rakel mit einer Breite von 25 cm auf ein Trägerpapier aufgetragen und durch einen Trocknungsofen mit einem Temperaturgradienten von 60 bis 110 °C bei einer Bahngeschwindigkeit von 1m/min gefahren. Es entsteht eine geschlossene, spannungsfreie Folie mit optisch homogener Oberfläche, die sich leicht vom Trägerpapier löst.

Die Folie weist folgende Materialeigenschaften auf:

| Prüfung | Einheit | Mittelwert |
|---|---|---|
| Foliendicke | mm | 0,11 |
| Glanzgrad (Winkel 60°) (DIN EN ISO 2813 (2015)) | -- | 1,0 |
| Zugfestigkeit (DIN EN ISO 523/3 (2003)) | MPa | 6,18 |
| Zugdehnung (DIN EN ISO 523/3 (2003)) | % | 557,4 |

### Beispiel 2:

Herstellung einer mehrschichtigen Schaumfolie:
Ein Versuchsansatz bestehend aus

| | |
|---|---|
| 1000 g | Hypod 2000-Dispersion (Dow Chemical) |
| 30 g | Verdicker - Borchigel (Borchers) |
| 5 g | Entschäumer - Foamex 825 (Tego) |
| 7,5 g | flüssiges Pigment 1 - LW506 (Helio Beit) |
| 22,5 g | flüssiges Pigment 2 - LW101 (Helio Beit) |

wurde vor der Verarbeitung gerührt und entlüftet (Entlüftungszeit 10 min). Die Viskosität wurde mit 3800 mPas gemessen. Die Viskosität wurde dabei gemäß DIN 53019-1 (2008) bei einer Temperatur von 23 °C gemessen.

Die Masse wurde durch ein 300 µm Rakel mit einer Breite von 15 cm und einer Geschwindigkeit von 25 mm/min auf einen Träger aufgetragen und in einem Trocknungsofen 3 min bei 60 °C vorgetrocknet und in einem weiteren Trocknungsofen 2 min bei 110 °C zu einer Folie verschmolzen.

In einem weiteren Schritt wurde ein Versuchsansatz zur Herstellung einer Schaumschicht besteht aus

| | |
|---|---|
| 550 g | Hypod 2000-Dispersion |
| 20 g | Verdicker - Borchigel (Borchers) |
| 6 g | nichtionisches Tensid - Ortegol P1 (Evonik) |
| 11,5 g | demineralisiertes Wasser |
| 1,5 g | flüssiges Pigment - LW 904 (Helio Beit) |

vor der Verarbeitung gerührt und entlüftet. Die Viskosität lag bei 17500 mPas. Anschließend wurde die Masse mit einem Rührgerät zu einem Schaum gerührt. Die Viskosität lag nun bei 35000 mPas. Die Viskosität wurde dabei gemäß Die Viskosität wurde dabei gemäß DIN 53019-1 (2008) bei einer Temperatur von 23 °C gemessen.

Anschließend wurde der Schaum mit einem 1000 µm Rakel mit einer Breite von 15 cm und einer Geschwindigkeit von 25 mm/min auf die erste Schicht aufgetragen, in einem Trocknungsofen 3 min bei 80 °C vorgetrocknet und in einem weiteren Trocknungsofen 2 min bei 120 °C zu einer Schaumfolie verschmolzen.

Die Dicke der mehrschichtigen Folie wurde mit 0,52 mm gemessen.

## Patentansprüche

1. Verfahren zur Herstellung einer Polyolefinfolie, umfassend die Schritte:
a) Auftragen einer Dispersion, umfassend mindestens ein Polyolefin, auf einen Träger und
b) thermische Behandlung der Dispersion auf dem Träger, um eine Polyolefinfolie zu erhalten.

2. Verfahren gemäß Anspruch 1, wobei die thermische Behandlung in Schritt b) die Schritte:
b1) Vortrocknen der Dispersion, umfassend mindestens ein Polyolefin, auf dem Träger, um das Dispersionsmittel weitgehend zu entfernen, und
b2) Erhöhen der Temperatur auf eine Temperatur oberhalb des Schmelzpunktes des mindestens einen Polyolefins, um eine Polyolefinfolie zu erhalten.

3. Verfahren gemäß Anspruch 2, wobei das Vortrocknen in Schritt b1) eine thermische Behandlung bei einer Temperatur von 40 bis 80°C, vorzugsweise von 50 bis 60°C, vorzugweise für eine Zeit von 2 bis 10 min, besonders bevorzugt von 3 bis 8 min, umfasst.

4. Verfahren gemäß irgendeinem der vorhergehenden Ansprüche, wobei die thermische Behandlung in Schritt b) oder Schritt b2) das Erwärmen auf eine Temperatur von 90 °C bis 190 °C, umfasst.

5. Verfahren gemäß irgendeinem der vorhergehenden Ansprüche, wobei der Träger genarbt ist.

6. Verfahren gemäß irgendeinem der vorhergehenden Ansprüche, wobei das mindestens eine Polyolefin Polyethylen, Polypropylen und/oder Copolymere davon umfasst.

7. Verfahren gemäß irgendeinem der vorhergehenden Ansprüche, wobei die Dispersion, umfassend mindestens ein Polyolefin, eine wässrige Dispersion ist, die vorzugsweise einen Feststoffanteil von 30 bis 70 Gew.-%, insbesondere von 40 bis 55 Gew.-%, aufweist.

8. Verfahren gemäß irgendeinem der vorhergehenden Ansprüche, wobei die Polyolefinfolie, die in Schritt b) erhalten wird einer Vernetzung mittels Elektronenbestrahlung, vorzugsweise mit 900 bis 1100 kV, unterzogen wird.

9. Verfahren gemäß irgendeinem der vorhergehenden Ansprüche, wobei die Dispersion, umfassend mindestens ein Polyolefin, eine Viskosität von 3000 bis 75000 mPas, vorzugsweise von 4000 bis 50000 mPas, aufweist.

10. Verfahren gemäß irgendeinem der vorhergehenden Ansprüche, wobei die Dispersion, umfassend mindestens ein Polyolefin, mindestens ein Rheologie Additiv, vorzugsweise ausgewählt aus der Gruppe, bestehend aus Zirkoniumverbidnungen, Celluloseverbidnungen und/oder Acrylat-Copolymeren, umfasst.

11. Verfahren gemäß irgendeinem der vorhergehenden Ansprüche, wobei die Dispersion, umfassend mindestens ein Polyolefin, mindestens ein Entschäumungsmittel, vorzugsweise ausgewählt aus kieselsäurehaltigen Polysiloxanen, umfasst.

12. Verfahren gemäß irgendeinem der vorhergehenden Ansprüche, wobei die Dispersion, umfassend mindestens ein Polyolefin, expandierbare Mikroholkugeln, mindestens ein anionisches Tensid und/oder mindestens ein nicht-ionisches Tensid umfasst.

13. Polyolefinfolie erhältlich durch das Verfahren gemäß irgendeinem der Ansprüche 1 bis 12.

14. Verbundschichtmaterial umfassend
- eine textile Trägerschicht oder eine textile Trägerschicht verbunden mit Polyurethan- oder Polyolefinschaum,
- eine mit der textilen Trägerschicht verbundene Kaschierschicht sowie
- eine Polyolefinfolie gemäß Anspruch 13.

15. Verwendung einer Polyolefinfolie gemäß Anspruch 13 oder eines Verbundschichtmaterials gemäß Anspruch 14 als Bezugsmaterial, vorzugsweise im automobilen Interieur.
